# EUROPEAN PATENT SPECIFICATION

(11) **EP 3 409 634 B1**
(45) Date of publication and mention of the grant of the patent: **03.07.2019**
(21) Application number: 18166027.5
(22) Date of filing: 06.04.2018
(51) Int. Cl.: B66C 3/00, E02F 9/00, F16F 7/04, E02F 3/36

(54) **SWING DAMPER OF A HANGING ROTARY JOINT**
SCHWINGUNGSDÄMPFER EINES HÄNGENDEN DREHGELENKS
AMORTISSEUR D'OSCILLATIONS D'UN JOINT ROTATIF SUSPENDU

(30) Priority: 29.05.2017 EE 201700027 U
(43) Date of publication of application: 05.12.2018
(73) Proprietor: OÜ Palmse Mehaanikakoda, 45405 Lääne-Viru maakond (EE)
(72) Inventor: Lille, Sander, 45301 Haljala (EE)
(74) Representative: Toome, Jürgen

(56) References cited:
- WO-A1-00/53522
- WO-A1-2004/031067
- US-A- 5 110 169

## Description

### Technical Field

Present invention relates to a swing damper for a hanging rotary joint. More specifically the invention relates to the swing damper to be used in a rotary joint between a jib and a working tool (for example a gripping unit (gripper) and a hanger) in order to avoid and dampen swinging of the gripper or the hanger at the end of the jib. Sometimes said device is also called an oscillation or swinging brake and formerly the device was also called a scissor-damper.

### Background Art

From prior art a number of different swing dampers for a lifting equipment to damp or reduce the swinging movement of a gripper or a hanger attached to the end of a jib by a rotary joint are known. Usually the hanger has two such swing dampers for damping the swinging movement in two crosswise directions around said rotary joint.

The swing damper according to the present invention is also called a friction type damper, i.e. in its structure friction elements and friction discs are used, due to the mutual friction of which unwanted swinging movement is supressed.

From International Patent Application WO2004/031067A1 (patent application was published on 15.04.2004) the structure of a hanging swing damper is known, in which the swing damper is arranged in the centre of the rotary joint between the two coaxial outermost joint pins. The joint pins have hollow design and there are bushes inside said pins, inside said bushes between said joint pins there is a bolt, on which a friction disc and pressure discs lie. Each bush by one of its end rests against pressure disc and there is a conical disc spring (Belleville spring) package opposite its other end, which is pressed against the bush by pressure bolt being screwed into the bolt. By means of these pressure bolts pressure is applied through sleeves in the joint pins to the conical spring packs in order to adjust the pressure applied to the pressure discs connected to one half of the rotary joint and to the friction disc in between of those, to both sides of which friction discs of the friction material are glued.

The main disadvantage of this solution is that without disassembly of said rotary joint it is not possible to change the friction discs. Also when using glued friction linings there is always a danger that said glued joint fails resulting in a failure of the whole damping unit.

From the US patent US5110169 (published 05. 05. 1992) the structure of a hanging rotary joint is known, in which the hanging damper is placed outside on one end of the joint pin. To the end of the joint pin there are several coaxial friction discs which are alternately connected with one and the other half of the rotary joint correspondingly and to which in the direction of the axis of the joint pin the discs are pressed by the conical disc spring pack, by means of which the pressure discs and friction discs are mutually pressed together. The distinctive feature of this solution is that the pressure of the conical disc spring pack is adjusted hydraulically. A disadvantage of this solution is also the use of the glued friction linings. The main problem in this case is the failure of the glued joint. In addition, as in this solution the pressure is adjusted hydraulically, disassembling of this structure is not simple. Also the friction linings may get contaminated in case of potential leakage which substantially reduces their effectiveness.

### Summary of invention

The present invention relates to a swing damper of a rotary hanging joint, the first goal of which is to damp the swinging movement between working device attached to the end of a jib and the jib itself.

The present invention relates to the swing damper of the hanging rotary joint, in which the swing damper is attached on the end of the rotary joint outside of the rotary joint and comprises two pressure discs coaxial with a joint pin, wherein the rotational movement of the pressure discs around the longitudinal axis of the joint pin is fixed in respect of one pivoting half of the rotary joint.

Additionally the rotary joint comprises a friction disc between the pressure discs, the rotary movement of which around the joint pin is fixed in respect to the other pivoting half of the rotary joint. The friction disc comprises at least one friction element made of the friction material. At the end of the joint pin there is a pressure device for pressing the pressure discs against the friction element(s) of the friction disc.

The expression "pivoting halves of a joint" in the present context means the parts of the structure which in relation to each other are pivoting around the joint pin of the rotary joint. For example the (upper) part of the rotary joint on the joint pin connected to the jib and the other (hanging) half of the rotary joint on the joint pin, that are pivoting around the joint pin in relation to each other. This other half has a working device attached to it, such as a gripping unit or a similar device, or another crosswise rotary joint (in respect to the previous rotary joint), to which the working device is attached.

The friction disc comprises at least one through socket, in which there is a friction element of friction material, having two parallel and opposite planar contact surfaces, which are pressed by the pressure device into contact with the first and the second friction disc respectively.

In the preferred embodiments the friction disc comprises several through sockets symmetrical in respect to the central bore in the disc, all of them comprising a friction element of the friction material and having the shape corresponding to the shape of the socket.

The advantage of the several friction elements is a larger total friction surface, and also the fact, that in case of damage or a breakdown of one of the friction elements the structure as a whole does not automatically become disabled - the dampening effect may be reduced, but the device as a whole continues to operate with other intact friction elements.

The friction element is pressed into its respective socket preferably by interference fit. As an alternative the friction element may be fixed into the socket by glue joint. Positioning of the friction element into its socket using interference fit or glue joint substantially facilitates the assembly of the swing damper and it is especially beneficial when replacing the friction disc in the field. But the structure according to the present invention is capable of working with the friction elements that are placed into the sockets with clearance fit, i.e. with so-called floating elements.

Placing the friction elements into the sockets have a substantial advantage over the prior art - gluing or riveting of the friction elements to the surface of the friction disc is avoided. In addition the sockets of the friction disc lock the friction elements geometrically between the two pressure discs. Even if the glued joint fails or the interference fit becomes loose, this does not affect the operation of the whole device. Therefore one of the main problems of the prior art is avoided - namely the detachment of the friction elements from the surface of the friction disc. In case of solutions known from earlier prior art the failure of one of the friction elements (so-called pad) disables the whole device (for example in case the friction element breaks down or becomes detached when glue joint fails).

According to one preferred embodiment of the invention the friction disc comprises several circular sockets symmetrical in relation to the central bore in the friction disc, in each socket there is friction element of the friction material, having the shape corresponding to the shape of the perimeter of the socket.

According to the second preferred embodiment of the invention the friction disc comprises several sockets symmetrical in relation to the central bore in the friction disc, said sockets having the shape of a ring sector, in each socket there is a friction element of the friction material, having the shape corresponding to the shape of the perimeter of the socket.

According to the third preferred embodiment of the invention the friction disc comprises a single socket of a polygonal shape symmetrical to the centre of the friction disc, where the socket contains a single friction element of the friction material, having the shape corresponding to the shape of the perimeter of the socket and comprising in the centre a through opening for a joint pin.

Preferably the pressure device comprises on the joint pin a conical disc spring package comprising at least one conical disc spring, by which pressure is generated from the end of the joint pin to squeeze the friction disc between the two pressure discs. Advantageously the conical disc spring pack of the pressure device comprises three conical disc springs.

According to the inventions in the second embodiment of the pressure device a spiral compression spring instead of a conical disc springs may be used. Also instead of the conical disc springs or the spiral compression spring an elastic element of the elastic material may be used.

The pressure device comprises a pressure nut at the end of the joint pin, which allows to adjust pressure of the pressure discs exerted by the conical disc spring pack or the spiral compression spring against the friction disc. This pressure nut is also used to restore the pressure of the pressure disc against the friction disc exerted by the conical disc spring pack or the spiral compression spring when the friction elements start to wear (i.e. by screwing on pressure).

### Brief description of drawings

Further following the rotary joint according to the invention is described by example embodiments referring to the attached schematic drawings, in which:

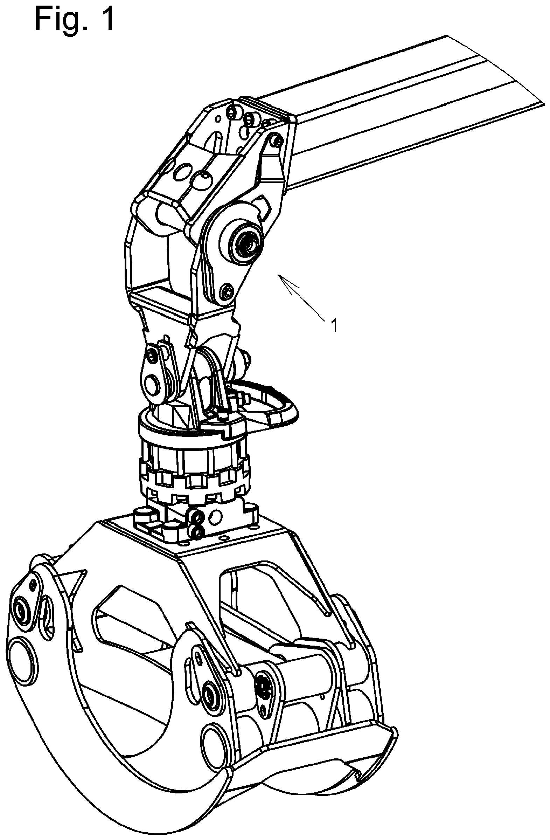

Figure 1 illustrates the position of a swing damper in a rotary joint between a jib and a gripping unit (gripper);

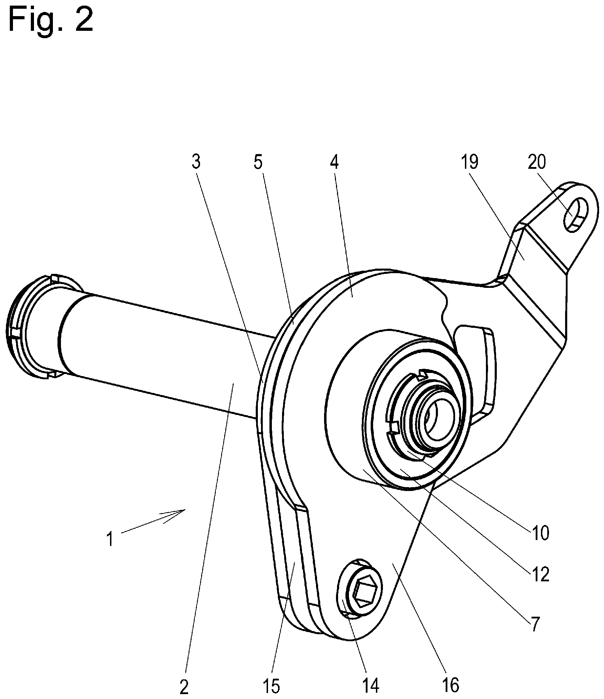

Figure 2 is an axonometric view of the swing damper at the end of the joint pin;

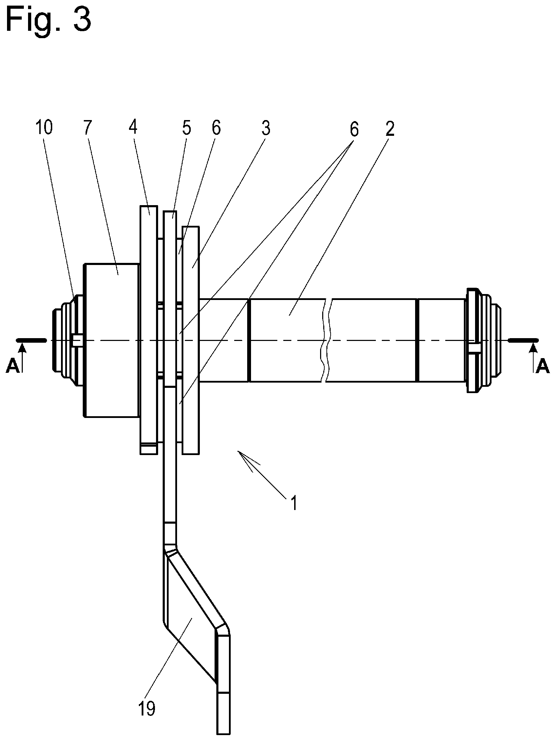

Figure 3 is a front view of the swing damper according to Figure 2;
Figure 4 is a longitudinal section of the swing damper along the line A-A according to Figure 3;
Figure 5 illustrates the embodiment of a friction disc having a ring of sector shaped sockets and Figure 6 represents the embodiment of the friction element for the sockets as shown in Figure 5;
Figure 7 shows the embodiment of the friction disc having round sockets and in Figure 8 the embodiment of the friction element for the socket according to Figure 7 is shown;
Figure 9 illustrates the embodiment of the friction disc comprising a single central socket having a hexagon perimeter and Figure 10 represents the friction element for the socket as shown in Figure 9;

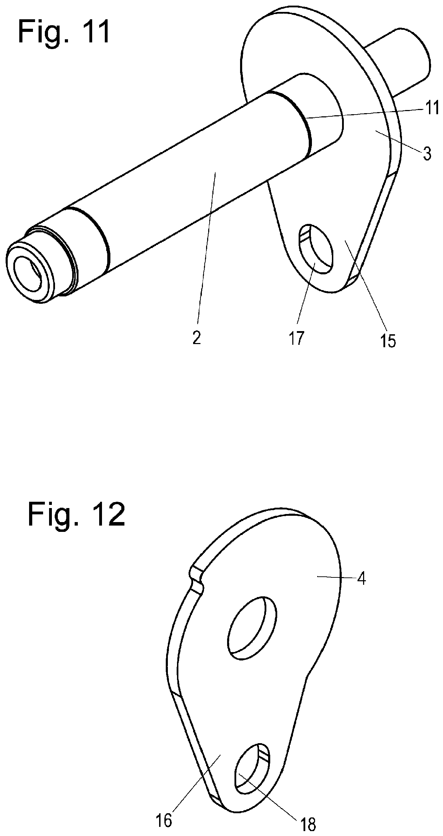

Figure 11 is an axonometric view of an inner pressure disc of the swing damper placed on the joint pin;
Figure 12 is an axonometric view of an outer pressure disc of the swing damper.

### Description of embodiments

A swing damper 1 comprises at the end of a joint pin 2 of a rotary joint two pressure discs 3, 4 that are coaxial with the longitudinal axis of joint pin 2.

Both pressure discs 3 and 4 have projecting levers (15 and 16) in order to fix the rotational movement of the respective pressure discs 3, 4 around the longitudinal axis of the rotary joint in relation to the respective half of the rotary joint.

Coaxially with joint pin 2 between pressure discs 3, 4 there is a friction disc 5, the rotational motion of which around the longitudinal axis of joint pin 2 is fixed in relation to the other half of the rotary joint.

Friction disc 5 comprises at least one socket 8 through friction disc 5, in which there is a friction element 6 having two parallel flat contact surfaces on opposite sides of friction element 6, that by means of a pressure device 7 are on both sides of friction disc 5 pressed into contact with the first and second pressure disc 3 and 4, respectively.

Friction elements 6 are preferably pressed into sockets 8 with interference fit or fixed by glued joint. This avoids movement of the friction element 6 relative to the socket.

During operation due to wear or loads the glued joint may become detached and/or interference fit may turn into clearance fit, i.e. friction elements 6 lie in their respective sockets with clearance. But as friction elements 6 are pressed by two sides between pressure discs 3 and 4, friction elements 6 in such a situation cannot fall out of sockets 8 and the unit still maintains its working condition.

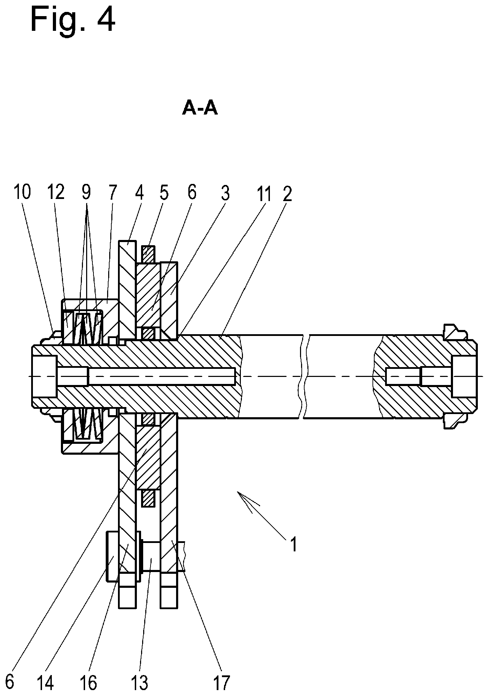

It is seen from the longitudinal section in Figure 4 that at the end of the joint pin there is formed a shoulder 11, against which rests the first pressure disc 3 mounted on joint pin 2.

On joint pin 2 there is mounted friction disc 5 with friction elements 6 lying in its sockets 8. Thereafter the so-called outer second pressure disc 4 is pushed onto joint pin 2. Onto joint pin 2 pressure device 7 is mounted, comprising a package of conical disc springs, which in the present embodiments includes three conical disc springs 9.

Instead disc springs 9 also a spiral compression spring may be used.

The pressure nut 10 through an end washer 12 exerts pressure to disc springs 9 and closes said pressure device 7 when viewed from the end of joint pin 2. The other end of pressure device 7 rests on the outer side of outer pressure disc 4.

As inner pressure disc 3 rests on joint pin 2 against shoulder 11 at the end of joint pin 2, then by tightening pressure nut 10 the pressure discs 3 and 4 from both sides of friction disc 5 are pressed against friction elements 6 in its sockets 8.

The advantage of the use of shoulder 11 is that upon exerting pressure on pressure discs 3 and 4 by pressure device 7 against friction elements 6 of friction disc 5, the force formed to generate the pressure is not transferred in the longitudinal direction of the joint pin to other elements of the rotary joint.

For operation of swing damper 1 pressure discs 3 and 4 are fixed with retainer bolt 13 to one moving half of the rotary joint so, that the rotational movement of pressure discs 3 and 4 around the longitudinal axis of joint pin 2 takes place together with said half of the rotary joint.

The movement of outer pressure disc 4 is at that fixed by the head 14 of retainer bolt 13. Pressure discs 3 and 4 have respective levers 15 and 16 and are fixed using respective bores 17 and 18 for retainer bolt 13 and its head 14.

Friction disc 5 is fixed by means of lever 19 protruding from it and a bore 20 at the end of lever 19 relative to the other moving half of the rotary joint such that the rotational movement of friction disc 5 around the longitudinal axis of joint pin 2 takes place together with the other moving half of the rotary joint.

When the halves of the rotary joint pivot around the longitudinal axis of joint pin 2, then pressure discs 3 and 4 pivot around the longitudinal axis of joint pin 2 together and between them friction disc 5 with friction elements 6 pivots around the longitudinal axis of joint pin 2 relative to pressure discs 3 and 4.

Whereas friction elements 6 are mounted in the sockets of friction disc 5, then rotation of friction disc 5 between the friction elements and pressure discs 3 and 4 relative to pressure discs 3 and 4 is impeded due to friction, i.e. for pivoting friction disc 5 in relative to pressure discs 3 and 4 a friction force between them has to be exceeded. Thus pivoting of friction disc 5 relative to pressure discs 3 and 4 is suppressed and together with them also the swinging movement around the rotary joint.

In the earlier solutions friction elements 6 are not glued to friction disc 5, the problems associated with the glued joint, such as detachment of glued joint, are entirely avoided. Also it is sufficient during maintenance works to replace only worn friction elements 6 in sockets 8 and instead of replacing friction disc 5.

Thus it is sufficient to detach pressure nut 10 from the end of joint pin 2 and pressure device 7 together with conical disc springs 9 in it and the washer 12, after which outer pressure disc 4 can be pulled away from friction elements 6.

Whereas rotation of friction disc 4 around the longitudinal axis of joint pin 2 in relation to the respective side of the rotary joint is prevented only by head 13 of retainer bolt 14 in the respective bore 18 of lever 16 of pressure disc 4, there is no need to unscrew retainer bolt 13.

Thus after detachment of pressure device 7 pressure disc 4 can just be pulled away from the end of joint pin 2 and simply the worn friction elements 6 in sockets 8 of friction disc can be replaced when necessary.

Pressure nut 10 at the end of joint pin 2 enables easy adjustment of the pressure generated by pressure discs 3 and 4 against friction elements 6 of friction disc 5 if required.

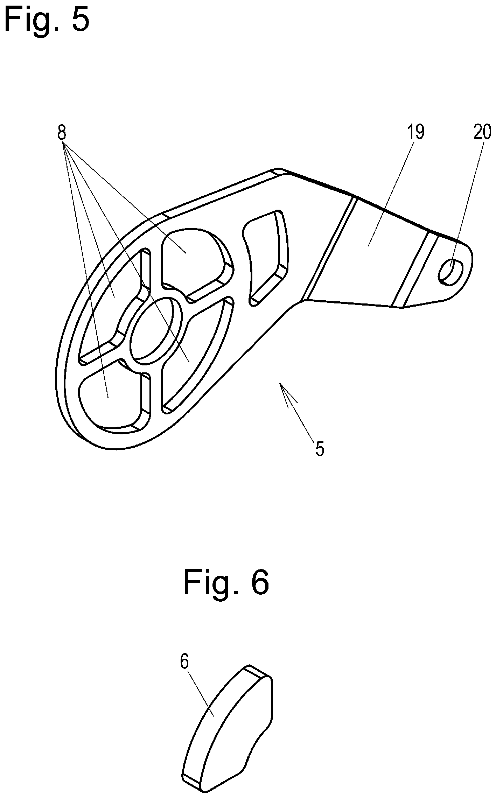

In Figures 5, 7 and 9 are shown three different embodiments of the friction disc 5 and the sockets 8 therein and in Figures 6, 8 and 9 are shown the corresponding embodiments of the friction elements 6 inserted into these sockets 8.

In Figures 5 and 6 there is illustrated an embodiment, where friction disc 5 comprises sockets 8 and friction elements 6 in the shape of a sector of the circle in order to maximize the contact surface between planar friction elements 6 and pressure discs 3 and 4.

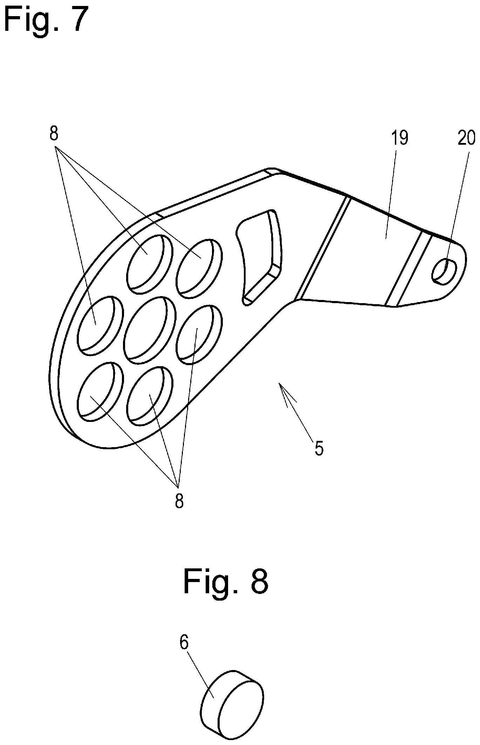

In Figures 7 and 8 there is illustrated an embodiment, where friction disc 5 comprises circular sockets 8 and friction elements 6, which are easiest to manufacture.

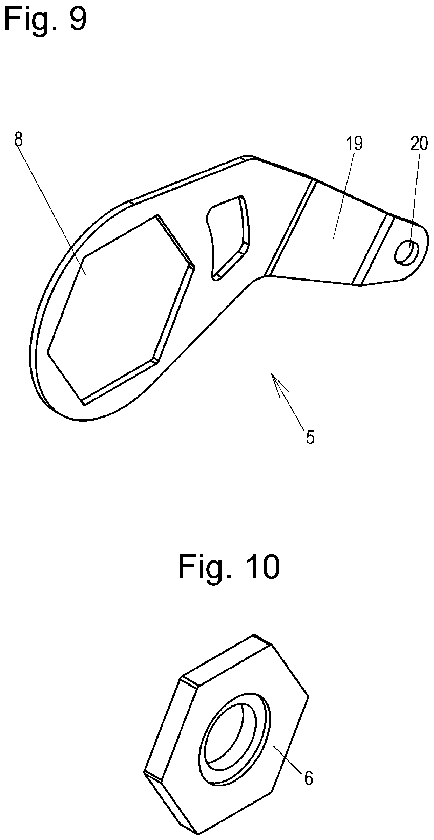

In Figures 9 and 10 there is illustrated an embodiment, where friction disc 5 comprises a single socket 8 for a friction element 6 to be inserted thereto as shown in Figure 10.

In order to avoid turning of friction element 6 in socket 8, a perimeter of the socket has the shape of a hexagon. The perimeter of friction disc 6 has also the shape of a hexagon and consequently friction element 6 inserted into socket 8 cannot rotate.

It is obvious for the person skilled in the art that the present invention is not limited to the embodiments described above and illustrated in the drawings but also other embodiments are possible within the scope of the accompanying claims.

### Reference signs list

- 1: - swing damper
- 2: - joint pin
- 3: - inner pressure disc
- 4: - outer pressure disc
- 5: - friction disc
- 6: - friction element
- 7: - pressure device
- 8: - socket
- 9: - conical disc spring (Belleville spring)
- 10: - pressure nut
- 11: - shoulder at the end of the joint pin
- 12: - end washer
- 13: - retainer bolt
- 14: - head of the retainer bolt 13
- 15: - lever for fastening inner pressure disc 3
- 16: - lever for fastening outer pressure disc 4
- 17: - bore for the retainer bolt
- 18: - bore for the head of retainer bolt
- 19: - lever for fastening of friction disc 5
- 20: - bore at the end of lever 19

## Claims

1. A swing damper (1) of a hanging rotary joint, where the swing damper (1) is located at the end of a joint pin (2) of the rotary joint and comprising two pressure discs (3, 4) coaxial with the joint pin (2), where rotational motion of the pressure discs around the longitudinal axis of the joint pin (2) is fixed relative to one pivoting half of the rotary joint, and between the pressure discs (3, 4) there is a friction disc (5) coaxial with the joint pin (2), where rotational motion of the friction disc (5) around the longitudinal axis of the joint pin (2) is fixed relative to the other pivoting half of the rotary joint, the friction disc (5) comprising at least one friction element (6) of the friction material, at the end of the joint pin (2) is a pressure device (7) for pressing the pressure discs (3, 4) against the friction element (6) of the friction disc (5), ***characterized in that*** the friction disc (5) comprises at least one socket (8) through the friction disc (5), where the friction element (6) of the friction material is mounted, having two planar contact surfaces on opposite sides of the friction element (6), which on the opposite sides of the frictions disc (5) are pressed into contact with the inner and outer pressure disc (3, 4) respectively by means of the pressure device (7).

2. The damper according to claim 1, ***characterized in that*** the friction disc (5) comprises several sockets (8) placed symmetrically in relation to the central bore in the friction disc (5), each socket (8) comprising said friction element (6) of the friction material, having a shape corresponding to the shape of the perimeter of the socket.

3. The damper according to claim 1, ***characterized in that*** the friction disc (5) comprises several circular sockets (8) placed symmetrically in relation to the central bore in the friction disc (5), each socket (8) comprising said friction element (6) of the friction material, having a shape corresponding to the shape of the perimeter of the socket.

4. The damper according to claim 1, ***characterized in that*** the friction disc (5) comprises several sockets (8) having a shape of a ring sector and mounted symmetrically in relation to the central bore in the friction disc (5), each socket (8) comprising said friction element (6) of the friction material, having a shape corresponding to the shape of the perimeter of the socket.

5. The damper according to claim 1, ***characterized in that*** the friction disc (5) comprises a single socket (8) of a polygonal shape symmetrical to the centre of the friction disc and in the socket a single friction element (6) of the friction material, having a shape corresponding to the shape of the perimeter of the socket and comprising a through opening in the centre for the joint pin (2).

6. The damper according to any of previous claims, ***characterized in that*** the pressure device (7) comprises on the joint pin a conical disc spring package comprising at least one conical disc spring (9), by which pressure is generated from the end of the joint pin to press the friction disc (5) between the two pressure discs (3, 4).

7. The damper according to claim 6, ***characterized in that*** the conical disc spring package of the pressure device (7) comprises three conical disc springs (9).

8. The damper according to any of previous claims 6 or 7, ***characterized in that*** the pressure device (7) comprises at the end of the joint pin (2) a pressure nut (10), by means of which the pressure of the pressure discs (3, 4) generated by the conical disc spring package against at least one friction element (6) of the friction disc (5) can be adjusted.

9. The damper according to any of previous claims 1 to 5, ***characterized in that*** the pressure device (7) comprises on the joint pin (2) a spiral spring by which from the end of the joint pin pressure is generated to press the friction disc (5) between the two pressure discs (3, 4).

10. The damper according to claim 9, ***characterized in that*** the pressure device (7) comprises at the end of the joint pin (2) a pressure nut (10), by means of which the pressure of the pressure discs (3, 4) generated by the spiral spring against at least one friction element (6) of the friction disc (5) can be adjusted.

11. The damper according to any of previous claims, ***characterized in that*** the friction elements (6) have been mounted into the sockets (8) by clearance fit.

12. The damper according to any of previous claims, ***characterized in that*** the friction elements (6) have been fixed into the sockets (8) by glued joint.

## Patentansprüche

1. Ein Schwingungsdämpfer (1) eines hängenden Drehgelenks, wo sich der Schwingungsdämpfer (1) am Ende eines Gelenkzapfens (2) des Drehgelenks befindet und zwei Druckscheiben (3, 4) gleichachsig mit dem Gelenkzapfen (2) umfasst, wo eine Drehbewegung der Druckscheiben um die längslaufende Achse des Gelenkzapfens (2) in Bezug auf eine drehbare Hälfte des Drehgelenks fixiert ist, und zwischen den Druckscheiben (3, 4) sich eine Reibscheibe (5) gleichachsig mit dem Gelenkzapfen (2) befindet, wo die Drehbewegung der Reibscheibe (5) um die Längsachse des Gelenkzapfens (2) in Bezug auf die andere drehbare Hälfte des Gelenkzapfens fixiert ist, die Reibscheibe (5) umfasst mindestens ein Reibelement (6) aus Reibmaterial, am Ende des Gelenkzapfens (2) ist eine Druckvorrichtung (7) zum Pressen der Druckscheiben (3, 4) gegen das Reibelement (6) der Reibscheibe (5), ***dadurch gekennzeichnet, dass*** die Reibscheibe (5) mindestens eine Aussparung (8) durch die Reibscheibe (5) umfasst, wo das Reibelement (6) aus Reibmaterial montiert ist und zwei ebenflächige Kontaktoberflächen auf den entgegengesetzten Seiten des Reibelements (6) hat, welches auf den entgegengesetzten Seiten der Reibscheibe (5) mit der inneren und äußeren Druckscheibe (3, 4) mit Hilfe einer Druckvorrichtung (7) zusammengepresst sind.

2. Schwingungsdämpfer gemäß Anspruch 1, ***dadurch gekennzeichnet, dass*** die Reibscheibe (5) mehrere Aussparungen (8) beinhaltet, die symmetrisch zur zentralen Bohrung in der Reibscheibe (5) angebracht wird, jede Aussparung (8) umfasst benanntes Reibelement (6) aus Reibmaterial, wessen Form der Form des Perimeters der Aussparungen entspricht.

3. Schwingungsdämpfer gemäß Anspruch 1, ***dadurch gekennzeichnet, dass*** die Reibscheibe (5) mehrere runde Aussparungen (8) beinhaltet, die symmetrisch zur zentralen Bohrung in der Reibscheibe (5) angebracht wird, jede Aussparung (8) umfasst benanntes Reibelement (6) aus Reibmaterial, wessen Form der Form des Perimeters der Aussparungen entspricht.

4. Schwingungsdämpfer gemäß Anspruch 1, ***dadurch gekennzeichnet, dass*** die Reibscheibe (5) mehrere Aussparungen (8) umfasst, die die Form eines Ringsektors haben und symmetrisch in Relation zur zentralen Bohrung der Reibscheibe (5) montiert werden, jede Aussparung (8) umfasst ein Reibelement (6) aus Reibmaterial, wessen Form der Form des Perimeters der Aussparungen entspricht.

5. Schwingungsdämpfer gemäß Anspruch 1, ***dadurch gekennzeichnet, dass*** die Reibscheibe (5) eine einzige Aussparung (8) in polygonaler Form enthält, die symmetrisch zum Mittelpunkt der Reibscheibe liegt und ein einzelnes Reibelement (6) aus Reibmaterial hat, wessen Form der Form des Perimeters der Aussparung entspricht und eine Durchgangsöffnung in der Mitte für den Gelenkzapfen (2) beinhaltet.

6. Schwingungsdämpfer gemäß einem der vorhergehenden Ansprüche, ***dadurch gekennzeichnet, dass*** die Druckvorrichtung (7) am Gelenkzapfen ein Tellerfederpaket umfasst, die mindestens eine konische Tellerfeder (9) umfasst, durch die der Druck vom Ende des Gelenkzapfens generiert wird um die Reibscheibe (5) zwischen zwei Druckscheiben (3, 4) zu pressen.

7. Schwingungsdämpfer gemäß Anspruch 6, ***dadurch gekennzeichnet, dass*** das Tellerfederpaket der Druckvorrichtung (7) drei konische Tellerfedern (9) beinhaltet.

8. Schwingungsdämpfer gemäß einem der vorhergehenden Ansprüche 6 oder 7, ***dadurch gekennzeichnet, dass*** die Druckvorrichtung (7) am Ende des Gelenkzapfens (2) eine Druckmutter (10) umfasst, durch die der Druck der Druckscheiben (3, 4), der von dem Tellerfederpaket generiert wird, gegen mindestens ein Reibelement (6) der Reibscheibe (5) eingestellt werden kann.

9. Schwingungsdämpfer gemäß einem der vorhergehenden Ansprüche 1 bis 5, ***dadurch gekennzeichnet, dass*** die Druckvorrichtung (7) auf dem Gelenkzapfen (2) eine Spiralfeder umfasst, durch die vom Ende des Gelenkzapfens Druck generiert wird, der die Reibscheibe (5) zwischen dem zwei Druckscheiben (3, 4) presst.

10. Schwingungsdämpfer gemäß Anspruch 9, ***dadurch gekennzeichnet, dass*** die Druckvorrichtung (7) am Ende des Gelenkzapfens (2) eine Druckmutter (10) umfasst, durch die der Druck der Druckscheiben (3, 4), der durch eine Spiralfeder generiert wird, gegen mindestens ein Reibelement (6) der Reibscheibe (5) eingestellt werden kann.

11. Schwingungsdämpfer gemäß einem der vorhergehenden Ansprüche, ***dadurch gekennzeichnet, dass*** die Reibelemente (6) mit Spielpassung in die Aussparungen (8) montiert wurden.

12. Schwingungsdämpfer gemäß einem der vorhergehenden Ansprüche, ***dadurch gekennzeichnet*, *dass*** die Reibelemente (6) in die Aussparungen (8) durch Klebeverbindung befestigt wurden.

## Revendications

1. Amortisseur (1) d'oscillations d'un joint rotatif suspendu, l'amortisseur (1) d' oscillations étant situé à l'extrémité d'un axe d'articulation (2) du joint rotatif et comprenant deux disques de pression (3, 4) coaxiaux à l'axe d'articulation (2), où le mouvement de rotation des disques de pression autour de l'axe longitudinal de l'axe d'articulation (2) est fixé par rapport à une moitié pivotante du joint rotatif, et entre les disques de pression (3, 4), il y a un disque de friction (5) coaxial avec l'axe d'articulation (2), où le mouvement de rotation du disque de friction (5) autour de l'axe longitudinal de l'articulation (2) est fixé par rapport à l'autre moitié pivotante de l'articulation rotative, le disque de friction (5) comprenant au moins un élément de friction (6) du matériau de friction, à l'extrémité de l'axe d'articulation (2), est un dispositif de pression (7) servant à presser les disques de pression (3, 4) contre l'élément de friction (6) du disque de friction (5), ***caractérisé en ce que*** le disque de friction (5) comprend au moins une douille (8) traversant le disque de friction (5), dans laquelle est monté l'élément de friction (6) du matériau de friction, comportant deux surfaces de contact planes sur les côtés opposés de l'élément de friction (6), qui sont pressés sur les côtés opposés du disque de friction (5) en contact respectivement avec les disques de pression intérieur et extérieur (3, 4) au moyen du dispositif de pression (7).

2. Amortisseur pour un enjeu selon la revendication 1, ***caractérisé en ce que*** le disque de friction (5) comprend plusieurs douilles (8) placées symétriquement par rapport à l'alésage central dans le disque de friction (5), chaque douille (8) comprenant ledit élément de friction (6) du matériau de friction, ayant une forme correspondant à la forme du périmètre de la douille (8).

3. Amortisseur pour un enjeu selon la revendication 1, ***caractérisé en ce que*** le disque de friction (5) comprend plusieurs douilles circulaires (8) placées symétriquement par rapport à l'alésage central dans le disque de friction (5), chaque douille (8) comprenant ledit élément de friction (6) du matériau de friction, ayant une forme correspondant à la forme du périmètre de la douille (8).

4. Amortisseur pour un enjeu selon la revendication 1, ***caractérisé en ce que*** le disque de friction (5) comprend plusieurs douilles (8) en forme de secteur d'anneau et placées symétriquement par rapport à l'alésage central du disque de friction (5), chaque douille (8) comprenant ledit élément de friction (6) du matériau de friction, ayant une forme correspondant à la forme du périmètre de la douille (8).

5. Amortisseur pour un enjeu selon la revendication 1, ***caractérisé en ce que*** le disque de friction (5) comprend une seule douille (8) de forme polygonale symétrique qui est située symétriquement par rapport au centre du disque de friction et dans la douille un seul élément de friction (6) du matériau de friction, ayant une forme correspondant à la forme du périmètre de la douille et comprenant une ouverture traversante au centre pour l'axe d'articulation (2).

6. Amortisseur pour un enjeu selon l'une quelconque des revendications précédentes, ***caractérisé en ce que*** le dispositif de pression (7) comprend sur l'axe d'articulation (2) un boîtier de ressort à disque conique comprenant au moins un ressort à disque conique (9) par lequel une pression est générée à partir de l'extrémité de l'axe d'articulation (2) pour presser le disque de friction (5) entre les deux disques de pression (3, 4).

7. Amortisseur pour un enjeu selon la revendication 6, ***caractérisé en ce que*** le boîtier de ressort à disque conique du dispositif de pression (7) comprend trois ressorts à disque conique (9).

8. Amortisseur pour un enjeu selon l'une des revendications précédentes 6 ou 7, ***caractérisé en ce que*** le dispositif de pression (7) comporte à l'extrémité de l'axe d'articulation (2) un écrou de pression (10) au moyen duquel la pression des disques de pression (3, 4) généré par le boîtier de ressort à disque conique contre au moins un élément de friction (6) du disque de friction (5) peut être ajusté.

9. Amortisseur pour un enjeu selon l'une quelconque des revendications précédentes 1 à 5, ***caractérisé en ce que*** le dispositif de pression (7) comprend sur l'axe d'articulation (2) un ressort en spirale par lequel une pression est générée à partir de l'extrémité de l'axe d'articulation (2) pour presser le disque de friction (5) entre les deux disques de pression (3, 4).

10. Amortisseur pour un enjeu selon la revendication 9, ***caractérisé en ce que*** le dispositif de pression (7) comprend à l'extrémité de l'axe d'articulation (2) un écrou de pression (10) à l'aide duquel la pression des disques de pression (3, 4) générée par le ressort en spirale contre au moins un élément de friction (6) du disque de friction (5) peut être ajusté.

11. Amortisseur pour un enjeu selon l'une quelconque des revendications précédentes, ***caractérisé en ce que*** les éléments de friction (6) ont été montés dans les douilles (8) par ajustement avec serrage.

12. Amortisseur pour un enjeu selon l'une quelconque des revendications précédentes, ***caractérisé en ce que*** les éléments de friction (6) ont été fixés dans les douilles (8) par un joint collé.
